# EUROPEAN PATENT APPLICATION

(11) **EP 4 776 177 A1**
(43) Date of publication of application: **15.07.2026**
(21) Application number: 25223104.8
(22) Date of filing: 12.12.2025
(51) Int. Cl.: G06K 7/10

(54) **METHODS AND SYSTEMS OF INVENTORY SYSTEM COORDINATION TO EXTEND THE READ RANGE OF READER DEVICES**

(30) Priority: 13.12.2024 US 202418981247
(71) Applicant: T MOBILE INNOVATIONS LLC, Overland Park KS 66251-2100 (US)
(72) Inventor: BUTLER, Robert, Overland Park, KS 66210 (US); FANG, Zheng, Mclean, VA 22102 (US); MUCHHALA, Ankit, Leesburg, VA 20176 (US)
(74) Representative: Suddaby, Mark Edward

(57) **Abstract**

A method comprises instructing, by a management application, a plurality of reader devices to perform a sequential inventory scan of an inventory environment, wherein the sequential inventory scan comprises each of the reader devices sequentially transmitting interrogation signals into an area of the inventory environment while all of the reader devices listen for and evaluate first response signals carrying first tag data received from a plurality of first radio frequency identification (RFID) tags positioned within a read of range of the reader devices; and instructing, by the application, at least two of the reader devices positioned within a predefined distance from each other to perform a concurrent inventory scan of the area of the inventory environment, wherein the concurrent inventory scan comprises the at least two of the reader devices concurrently transmitting power signals into the area of the inventory environment.

## Description

### BACKGROUND

Modern inventory environments (e.g., warehouses and retail stores) may store items on behalf of various customers/business enterprises. Each item may be coupled to one or more tags, such as a Radio Frequency Identification (RFID) tag. Antenna systems and/or reader devices may be positioned throughout the inventory environment. RFID tags may include various components, such as, for example, an integrated circuit for storing and processing information, an antenna for communicating signals, etc. For example, the integrated circuit may include memory for storing tag data (e.g., a unique identifier), a modulator for modulating signals, and circuitry for power management. The RFID tag may receive signals from antenna systems/reader devices to obtain power, obtain power from the received signals, and transmit responses back to the reader devices.

### SUMMARY

In an embodiment, a management system is disclosed. The management system comprises a non-transitory memory, and an application stored at the memory. The application causes the management system to be configured to sequentially instruct each of a plurality of reader devices to transmit a first interrogation signal to first radio frequency identification (RFID) tags within a read range of a respective reader device in a respective read session, instruct all of the reader devices to listen for and evaluate first signal responses carrying first tag data received from the first RFID tags during a plurality of read sessions performed by the reader devices, receive, from each of the reader devices, the first tag data and first signal metadata describing first signal responses received by each of the reader devices from each of the first RFID tags, and determine a location of each of the first RFID tags based on the first signal metadata received from each of the reader devices. When a missing tag is identified in the first tag data received from each of the reader devices, the application causes the management system to be configured to instruct at least two reader devices of the reader devices that are positioned within a predefined distance from each other to concurrently transmit power signals into an area of an inventory environment, instruct a first reader device of the at least two reader devices to transmit a second interrogation signal into the area of the inventory environment, instruct all of the reader devices to listen for and evaluate second signal responses carrying second tag data received from a second RFID tag positioned outside of read ranges of the at least two reader devices, receive, from each of the at least two reader devices, the second tag data, and evaluate the second tag data to determine that the missing tag is identified in the second tag data.

In another embodiment, a method of inventory system coordination to extend read ranges of a plurality of reader devices and increase a precision of radio frequency identification (RFID) tag location detection in an inventory environment is disclosed. The method comprises instructing, by an application executing at a computer system, a plurality of reader devices to perform a sequential inventory scan of an inventory environment by (a) instructing, by the application, a first reader device of the reader devices to transmit an interrogation signal into an area of the inventory environment, wherein a first plurality of radio frequency identification (RFID) tags are positioned within a read range of the first reader device, (b) instructing, by the application, the reader devices to listen for and evaluate first response signals carrying first tag data received from the first RFID tags, and (c) repeating, by the application, steps (a) and (b) for each of the reader devices. The method further comprises receiving, by the application, the first tag data and first signal metadata describing the first response signals received from each of the reader devices, wherein the first signal metadata received from each the reader devices is different, and determining, by the application, a first location of each of the first RFID tags based on the first signal metadata received from each of the reader devices. The method further comprises after the sequential inventory scan is complete, instructing, by the application, at least two reader devices to perform a concurrent inventory scan of the area of the inventory environment by (d) instructing, by the application, the at least two reader devices to concurrently transmit power signals into the area of the inventory environment, wherein a second plurality of RFID tags are positioned within an extended read range of the at least two reader devices, (e) instructing, by the application, the reader devices to listen for and evaluate second response signals received from the second RFID tags, and (f) repeating, by the application, steps (a) and (b) for different combinations of at least two reader devices that are positioned within a predefined distance from each other. The method further comprises receiving, by the application, second tag data and second signal metadata describing the second response signals from each of the reader devices, wherein the second signal metadata received from each of the reader devices is different.

In yet another embodiment, a method comprises instructing, by an application executing at a computer system, a plurality of reader devices to perform a sequential inventory scan of an inventory environment, wherein the sequential inventory scan comprises each of the reader devices sequentially transmitting interrogation signals into an area of the inventory environment while all of the reader devices listen for and evaluate first response signals carrying first tag data received from a plurality of first radio frequency identification (RFID) tags positioned within a read of range of the reader devices, and instructing, by the application, at least two of the reader devices positioned within a predefined distance from each other to perform a concurrent inventory scan of the area of the inventory environment, wherein the concurrent inventory scan comprises the at least two of the reader devices concurrently transmitting power signals into the area of the inventory environment while a first reader device of the at least two of the reader devices performs a scan of the area of the inventory environment and while all of the reader devices listen for and evaluate second response signals carrying second tag data received from a plurality of second RFID tags positioned within an extended read of range of the at least two of the reader devices.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a communication network for inventory system coordination according to various embodiments of the disclosure.
FIGS. 2A and 2B are diagrams illustrating the reading of tags using the inventory system of FIG. 1 according to various embodiments of the disclosure.
FIGS. 3A, 3B, 3C, 3D, and 3E are diagrams illustrating the reading of densely positioned tags using the inventory system of FIG. 1 according to various embodiments of the disclosure.
FIGS. 4A, 4B, and 4C are diagrams illustrating the reading of moving tags using the inventory system of FIG. 1 according to various embodiments of the disclosure.
FIG. 5 is a flowchart illustrating a first method of inventory system coordination using the inventory system of FIG. 1 according to various embodiments of the disclosure.
FIGS. 6A and 6B are flowcharts illustrating a second method of inventory system coordination using the inventory system of FIG. 1 according to various embodiments of the disclosure.
FIG. 7 is a block diagram of a computer system implemented within the communication network of FIG. 1 according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

RFID reader devices (also referred to herein as "reader devices") operate by emitting radio frequency signals through antennas to communicate with RFID tags attached to items in an inventory environment, such as a warehouse or retail store. Specifically, the reader devices may communicate with RFID tags by emitting interrogation signals (e.g., an electromagnetic signal carrying modulated data and power) in a predefined frequency band (e.g., licensed or unlicensed frequency band). These signals may be used to harvest power at the RFID tags, and then use the harvested power to transmit tag data, such as a unique identifier, back to the reader device. The RFID tag responds by modulating its signal and radiating a response signal that contains the tag data.

The reader device receives the response signal from the tag and captures both the tag data and metadata about the response signal, such as the received signal strength indicator (RSSI), phase of the signal, timing information associated with the signal, etc. The reader device then forwards the tag data and determined metadata to a management system for processing. The management system may use the known location of the reader device and the signal metadata to estimate a location of the RFID tag (e.g., using triangulation, trilateration, signal-strength based calculations, time-of-arrival, or time-of-flight calculations, etc.).

Although many reader devices (and antennas either separate from or included with the reader devices) may be deployed in an inventory environment, each reader device (and/or antenna) may be configured to operate independently, in an isolated manner relative to the other reader devices (and/or antennas) in the inventory environment. For example, when a first reader device (and/or standalone antenna) transmits an interrogation signal into an area of the inventory environment, the RFID tags within the read range of the first reader device may emit response signals carrying tag data omnidirectionally, and these response signals may be received at other reader devices in the environment. However, the other reader devices may be programmed to ignore or filter out these response signals since the other reader devices did not send or instruct the sending of the interrogation signals to trigger the response signals. For example, the first reader device may only evaluate response signals received in response to an interrogation signal sent or instructed to be sent by the first reader device, and may be programmed to ignore or filter out response signals received in response to interrogation signals sent by the other reader devices. All reader devices in an inventory environment may be similarly programmed.

In this way, reader devices may be limited to scanning tags within the read range of the respective reader device. Moreover, the response signals received across the reader devices may be largely ignored or filtered out, leading to a waste of valuable data that may otherwise be used to enhance the evaluations made by the system. Therefore, the independent, uncoordinated, and cumbersome nature of performing inventory scans is resource inefficient, and fails to optimize the use of the response signals received across the different reader devices in the inventory environment.

The present disclosure addresses the foregoing technical problems by providing a technical solution in the technical field of inventory management and precision tracking of RFID tags (sometimes referred to hereinafter as "tags"), by coordinating the functions of the reader devices/antennas in the inventory environment, to increase the read range of the reader devices and optimize the use of the signal responses received across the reader devices to improve system performance. As further described herein, multiple reader devices (e.g., within a predefined distance from one another) may be programmed to perform a sequential inventory scan of the inventory environment and a concurrent inventory scan of the inventory environment. In the sequential inventory scan, the reader devices/antennas may individually scan tags within a read range of each reader device, and all reader devices that receive response signals from the tags may be programmed to evaluate the received response signals, regardless of whether the response signals were triggered by the respective reader devices. In the concurrent inventory scan, multiple reader devices may transmit power signals into an area of the inventory environment, which may create a cumulative effect of increasing the read range of the reader devices. In this way, tags that are outside of the standard read range of the reader devices may receive sufficient power to transmit back response signals.

The term "reader devices" as used herein may refer to the actual reader device or the antenna used to communicate with the tags, in which the antenna may or may not be part of the reader device. For example, the term "reader device" may encompass standalone antennas and/or antenna rays that transmit interrogation signals and/or power signals based on instructions received by the management system and/or another reader device. The term "concurrently" may refer to multiple tasks/processes that may occur at the same time for at least a period of time, but the multiple tasks/processes may not necessarily start and stop at the exact same moment. The term "simultaneously" may refer to multiple tasks/processes occurring at the exact same time, with substantially the same start moment and end moment. The term "sequentially" may refer to multiple tasks/processes occurring one after another in a specific order, with each task beginning only after the previous task has been completed, or with one or more tasks slightly overlapping with a previous task.

In an embodiment, the inventory system may include different types of reader devices, antennas (e.g., separate from the reader devices or integrated with the reader devices), tags, and a management system that controls the operations of the reader devices. The reader devices may be configured to operate on the licensed or unlicensed frequency bands to communicate with the tags in the inventory environment. The power level of the reader devices may correlate with the read range of the reader device (e.g., a reader device with higher power levels may transmit stronger signals that can reach and power tags at greater distances). A read range of a reader device may refer to a distance from the reader device, in which the reader device can successfully communicate with and receive response signals from a tag. In other words, only tags within a read range of a reader device may obtain sufficient power from interrogation signals received from the reader device to emit back a response signal carrying tag data. The tags may include a memory storing tag data, a processor, and one or more antennas configured to communicate the tag data. The tag data may include unique identifiers, product or asset information, and in some cases, additional data such as serial numbers, batch numbers, or sensor readers (e.g., temperature/humidity data).

An inventory environment (e.g., a retail store and warehouse) may include any number of items (up to thousands or millions of different items), and each item may include at least one tag. The management system may include a data store for storing data used to manage the operations of the reader devices deployed in the inventory environment, and may include a management application to receive and process the data from the reader devices, and instruct the reader devices based on the data, as further described herein. The management system may be deployed within the inventory environment or external to the inventory environment.

The management system may maintain a data store with data describing the reader devices and tags deployed in the inventory environment. For example, the data store may store reader data describing the configurations (e.g., frequency band, directional setting, etc.), locations (e.g., known deployment locations), and read ranges of each reader device used in the inventory environment. The read ranges may be three-dimensional (3D) coordinates (or coordinate ranges) relative to inventory environment or Global Positioning System (GPS) coordinates (or coordinate ranges). The data store may also maintain inventory data based on the response signals received from the tags in the inventory environment. The inventory data may include an identification of the reader device(s) that communicated with the tag (e.g., the reader device(s) from which power signals and/or interrogation signals were received), the tag data received from the tag, signal metadata describing attributes of the response signal over which the tag data was received and the reader device from which the signal metadata was received, and location data defining a location of the tag computed based on the response signals received by multiple reader devices.

The data store may also maintain overlapping read ranges, which may refer to areas of the inventory environment that are included in a read range of at least two reader devices. For example, the overlapping read range may refer to an area of a read range of a first reader device that is also in the read range of a second reader device. The overlapping read ranges may also be 3D coordinates/coordinate ranges, or GPS coordinates/coordinate ranges. The data store may also maintain missing or moving tag data, which may include tag data associated with tags that have been identified as missing from an inventory environment or moving within an inventory environment. The data store may also maintain item tag data, indicating mappings between tags and corresponding attached items. The data store may also maintain rules (e.g., logic, code, conditions, etc.), such that a management application at the management system may be programmed according to the rules to perform the coordination methods disclosed herein.

A management application executing on a processor of the management system may operate based on the rules to determine when and how to coordinate the transmission of interrogation signals and power signals into the inventory environment. In an embodiment, a method of inventory system coordination to extend the read ranges of reader devices and increase a precision/accuracy of tag location detection in the inventory environment may begin with the management application instructing the reader devices to perform a sequential inventory scan of the inventory environment. This may be performed by sequentially transmitting instructions to different reader devices to perform respective inventory scans, while transmitting instructions to other reader devices to receive and evaluate response signals received from the tags (i.e., instead of discarding or filtering out the received response signals).

To perform the sequential inventory scan, for example, the management application may transmit a first instruction to a first reader device to transmit interrogation signals into an area of the inventory environment, evaluate response signals carrying tag data received from tags in a read range of the first reader device to obtain signal metadata, and transmit the signal metadata and tag data to the management server. The management application may also transmit second instructions to other reader devices to listen for response signals received from tags that are activated by the interrogation signals sent by the first reader device. For example, the second instructions may instruct the other reader devices to continuously or intermittently (e.g., according to a predefined schedule) be listening for response signals from tags in the inventory environment, or to listen for the response signals for a predefined period of time after the first instructions are sent to the first reader device. The second instructions may also instruct the other reader devices to evaluate/extract the response signals to obtain signal metadata, and transmit the signal metadata and tag data to the management server. In some embodiments, the reader devices are all programmed to listen for response signals received from all tags, regardless of whether the response signals are triggered by the respective reader device or other reader devices.

Next, the management application may instruct a second reader device to transmit interrogation signals into an area to trigger tags within a read range of the second reader device to emit response signals. The management application may also instruct the second reader device and other reader devices to read and evaluate the response signals. All of the reader devices may transmit the tag data and signal metadata to the management server. Next, the management application may instruct a third reader device to transmit interrogation signals into an area to trigger tags within a read range of the third reader device to emit response signals. The management application may also instruct the third reader device and all the other reader devices to read and evaluate the response signals. All of the reader devices may transmit the tag data and signal metadata to the management server. And this process may continue until the management application instructs the last reader device to perform the sequential inventory scan.

In this way, the management application at the management system may receive tag data and signal metadata pertaining to a single tag from multiple reader devices, as opposed to a single reader device. The management application may thus be enabled to determine a location of the tag using a larger number of data points (i.e., based on the signal metadata received from all of the reader devices as opposed to a single reader device). Increasing the number of data points in a location calculation can significantly enhance the accuracy, precision, and reliability of calculated RFID tags. For example, if the signal metadata received from multiple reader devices each include a received signal strength indicator (RSSI), a time of arrival (ToA), a time of flight (ToF) of the response signals, and the management application knows the location of the reader devices, then the management application may compute a more accurate signal strength and/or time-based location of the tag using the RSSI values and/or ToA values received from the multiple reader devices (e.g., using multilateration). For example, if the signal metadata received from multiple reader devices each include an angle of arrival (AoA) of the response signal, the management application may compute a more accurate AoA-based location of the tag using the AoA values (e.g., using triangulation). The additional signal metadata received from multiple reader devices (as opposed to one reader device) may also be used to increase redundancy (e.g., detect errors, perform error corrections, and be more fault tolerant), filter out multipath effects (e.g., remove signal distortions and improve accuracy of location estimates), analyze signal phases, improve coverage in complex environments, and cross-verify data between the reader devices. Therefore, at this stage, the management application has sequentially performed an inventory scan of the tags detectable by the reader devices individually, and determined a location for each of the tags using signal metadata received from multiple reader devices.

The management application may subsequently instruct the performance of a concurrent inventory scan, to increase the power of the interrogation signals sent into the area of the inventory environment. The concurrent scanning of the tags may allow tags that may have not been detected by the aforenoted sequential scans to be powered and detected. For example, the tags that are positioned in gaps within the read ranges of the reader devices, or the tags that may be positioned in dense environments (e.g., boxes/crates) may be powered and read using the concurrent scanning. To perform the concurrent scanning, the management application may instruct at least two reader devices to perform an inventory scan concurrently, in which one of the at least two reader devices sends interrogation signals (e.g., electromagnetic (power) signals including modulated data) into the area of the inventory environment, and the remaining at least two reader devices transmit power signals (e.g., electromagnetic signals) into the area of the inventory environment. When multiple reader devices transmit signals into the same area, the power of the signals is cumulatively amplified based on the power of each of the signals transmitted into the area, thereby increasing the read range of each of the reader devices. Therefore, coordinating multiple reader devices to emit power (by way of interrogation and power signals) simultaneously into the inventory environment may allow the inventory system to obtain inventory data about tags and items that would otherwise not be detectable by inventory systems only implementing sequential tag scanning.

The concurrent scanning may also be used to identify moving tags in the inventory environment. For example, at a first time, a first reader device may detect a tag in an inventory scan within a read range of the first reader at a first reader device. However, at a subsequent time, the first reader may not detect the tag, and a second adjacent reader device may also not detect the tag. In this situation, the management application may be programmed, according to a rule based on when two adjacent reader devices no longer detect a tag that was previously detected, to perform a concurrent scan to expand the read ranges of both the first reader device and the second reader device. The two reader devices may concurrently inject signals into the same area of the inventory environment to expand the initial read ranges of the two readers. At least one of the reader devices may detect the tag, in which case the management application may determine that the tag is moving or has moved to another location in between or outside the read ranges of the first reader device and the second reader device.

As another example, at a first time, a first reader device may detect a tag while a second (adjacent) reader device does not detect the tag (i.e., the tag is positioned in the read range of the first reader device). At a second time, the first reader device may no longer detect a tag while the second reader device detects the tag (i.e., the tag has moved to a location in the read range of the second reader device). At a third time, neither the first reader device nor the second reader device may detect the tag. The management application may continue to instruct reader devices in the direction of the tag movement, until the tag has exited the inventory environment, to track the movement of the tag and record when the tag (and thus the attached item) exited the inventory environment.

Therefore, the embodiments disclosed herein effectively increase the accuracy and precision of tag location detection in an inventory environment by programming all reader devices to listen and evaluate response signals received from tags. In addition, the embodiments disclosed herein extend the read range of one or more reader devices (e.g., positioned within a predefined distance from one another), which may be used to detect tags positioned outside the standard read range of the reader devices, detect tags positioned in densely packed boxes/crates (that otherwise may not be read due to interference/congestion), detect the movement of tags within the inventory environment, and/or detect the time/location of tags as the tags exit the inventory environment. More precise and accurate locations of RFID tags are crucial for inventory management, allowing for real-time tracking of tags and reducing the likelihood of misplaced or lost items, while optimizing environment operations to enable faster tag retrieval and identification of stolen items, automated inventory counts, and efficient inventory management. Accordingly, the embodiments disclosed herein enable a more efficient use of the resources in the inventory system to more accurately position tags and track the movement of the tags in an inventory environment, thereby increasing inventory system efficiency and capacity. In this way, the embodiments disclosed herein keep tags in an environment engaged while within a particular area, to essentially identify missing tags to make the tags detectable.

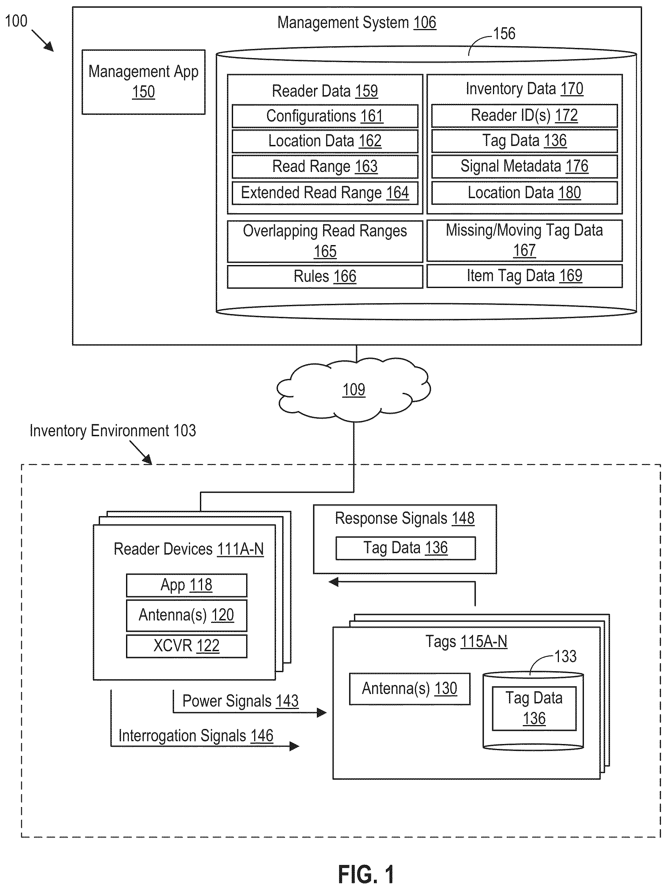

Turning now to FIG. 1, a communication network 100 is described. The communication network 100 includes an inventory environment 103, a management system 106, and a network 109. The inventory environment 103 includes one or more reader devices 111A-N, and tags 115A-N. The network 109 may be one or more private networks, one or more public networks, or a combination thereof. While the management system 106 is shown in FIG. 1 as being separate from the network 109, in some embodiments, it should be appreciated that the management system 106 may be part of the network 109. In the embodiment shown in FIG. 1, an inventory system may include the management system 106, the reader devices 111A-N, and tags 115A-N.

The tags 115A-N may each be RFID tags, or small devices used in inventory systems to store and transmit data wirelessly to reader devices 111A-N. The tags 115AN may each be coupled to (e.g., affixed to) different items and thus may be used for tracking and identifying the items, enabling efficient inventory management and asset tracking in various inventory environments 103 (e.g., warehouses, retail stores, centers, etc.). Each of the tags 115A-N includes a microchip (e.g., an integrated circuit with processing and memory resources) for data storage and processing, one or more memories (e.g., data store 133), and one or more antennas 130 for communication. The one or more antennas 120 may enable the tags 115A-N to operate, for example, in one or more predefined frequency bands. In an embodiment, the tags 115A-N may operate to communicate reader devices 111A-N over licensed frequency bands and/or unlicensed frequency bands. The data store 133 may store tag data 136. The tag data 136 may include a variety of data, such as, for example, a tag identifier (e.g., a unique serial number or electronic product code (EPC) distinguishing different tags 115A-N from one another), item information (e.g., data about the item to which the tag 115A-N is attached), manufacturer or supplier information about the item, logistics data, usage data (e.g., records and when and where the tag 115A-N has been scanned), etc. For example, the tag data 136 may include an Electronic Product Code (EPC), a serial number, a batch number, an expiration date, sensor readers (e.g., temperature or humidity), or user-defined data depending on the capability and capacity of the tag 115A-N.

The reader devices 111A-N may be devices that are configured to communicate with the tags 115A-N over licensed and/or unlicensed frequency bands. For example, the reader devices 111A-N may include antennas 120 and other communication equipment enabling the reader devices 111A-N to communicate with the tags 115A-N. The reader devices 111A-N may also include an application 118 and a radio transceiver 122 (shown as "XCVR 122" in FIG. 1). The application 118 may be instructions stored on a memory of the reader device 111A-N, which may be executed by a processor of the reader device 111A-N to perform various steps as disclosed herein. For example, the application 118 may transmit interrogation signals 146 and/or power signals 143 to one or more tags 115A-N in the inventory environment 103. The interrogation signals 146 are sent by the reader device 111A-N to query the tags 115AN, and the interrogation signals 146 include modulated data with electromagnetic energy, that both provides energy to the tags 115A-N and prompts the tags 115A-N to respond with the tag data 136. The power signals 143 refer to the electromagnetic energy signal sent from the reader devices 111A-N to provide energy to the tags 115A-N, enabling the tags 115A-N to harvest power from the received energy. In this way, interrogation signals 146 include commands and data carried with electromagnetic energy for communication with one or more tags 115A-N, and the power signals 143 may include electromagnetic energy that serve to energize one or more tags 115A-N (without the modulated commands and/or data).

The tags 115A-N may receive the interrogation signals 146 and power signals 143. When a tag 115A-N receives a power signal 143, the tag 115A-N may be configured to harvest the energy from the power signal 143 to obtain power and store the power at a local power source until an interrogation signal 146 is received, triggering the tag 115AN to emit response signals 148. When the tag 115A-N receives an interrogation signal 146, the tag 115A-N may be configured to harvest energy from the interrogation signal 146 and use the energy to emit response signals 148. The response signals 148 may carry the tag data 136 (and any other requested data indicated in the interrogation signal 146). The response signals 148 may be emitted omnidirectionally, or may be emitted in the direction of the requesting reader device 111A-N (e.g., when the tag 115A-N is a millimeter wave tag).

The management system 106 may be a device, UE, computer, or computer system, with various types of resources that may be interworked to control the operations of the reader devices 111A-N to maintain accurate data regarding tags 115A-N in the inventory environment 103. The management system 106 may include a processor, a memory, a radio transceiver, and other hardware or software components depending on the type of computer system running the management system 106. The management system 106 may include a management application 150, which may include instructions stored on a memory of the management system 106 and executable by a processor of the management system 106. The management application 150 may communicate with the reader devices 111A-N, as further disclosed herein. For example, management application 150 may instruct the reader devices 111A-N to take an inventory of the tags 115A-N in the inventory environment 103 using sequential and/or concurring scanning techniques, as further described herein.

The management system 106 may also include a data store 156 (e.g., one or more memories, distributed or co-located). The data store 156 may store reader data 159, inventory data 170, overlapping read ranges 165, rules 166, missing/moving tag data 167, and item tag data 169. The reader data 159 may include data describing the reader devices 111A-N deployed in the inventory environment 103. Specifically, the reader data 159 may include configurations 161, location data 162, read ranges 163, and extended read ranges 164 for each of the reader devices 111A-N deployed in the inventory environment 103. The configurations 161 may indicate the frequency bands and power output levels at which the reader devices 111A-N are capable of communicating. The location data 162 may indicate a known location of the reader devices 111A-N deployed in the inventory environment 103. The known location may be formatted as 3D coordinates relative to a known coordinate range of the inventory environment 103, GPS coordinates, a geohash value, and/or any other value identifying a location of each of the reader devices 111A-N. The read range 163 may refer to a maximum distance (e.g., radially/omnidirectionally from the reader device 111A-N or directionally from the reader device 111A-N) within which the reader device 111A-N can successfully transmit signals to a tag 115A-N, enabling the tag 115A-N to harvest enough power to transmit a response signal 148 back to the reader device 111A-N. The read range 163 of a reader device 111A-N may be affected by various factors, such as, for example, a power level/output of the reader device 111A-N, the type of tag 115A-N, environmental conditions, and signal interference. The extended read range 164 may refer to an extended distance (beyond the read range 163) within which multiple reader devices 111A-N can successfully transmit signals to a tag 115A-N, enabling the tag 115A-N to harvest enough power to transmit a response signal 148 back to the reader device 111A-N.

The inventory data 170 may include an identification 172 of the reader device(s) 111A-N that communicated with the tag 115A-N (e.g., the reader device(s) 115A-N from which power signals 143 and/or interrogation signals 146 were received) and indication of a type of signal (e.g., power signal 143 or interrogation signal 146) received from a respective reader device 111A-N. The inventory data 170 may include the tag data 136 received from the tag 115A-N. The inventory data 170 may include signal metadata 176 describing attributes of the response signal 148 over which the tag data 136 was received, and may include an identification 172 of the corresponding reader device 111A-N from which the signal metadata 176 was received. For example, the signal metadata 176 may include a received signal strength indicator (RSSI), phase, timing information (time-of-arrival, time-of-flight), etc. of the response signal. The inventory data 170 may include location data 180 defining a location of the tag 115A-N computed based on the response signals 148 received by multiple reader devices 111A-N.

The overlapping read ranges 165 may refer to areas of the inventory environment 103 that are included in a read range 163 of at least two reader devices 115A-N. For example, the overlapping read range 165 may refer to an area of a read range 163 of a first reader device 111A-N that is also in the read range 163 of a second reader device 111A-N. The overlapping read ranges 165 may also be 3D coordinates/coordinate ranges, or GPS coordinates/coordinate ranges. The missing/moving tag data 167 may include tag data 136 associated with tags 115A-N that have been identified as missing from the inventory environment 103 or moving within the inventory environment 103. The rules 166 may refer to programming (e.g., logic, code, conditions, etc.) at the management application 150, triggering the management application 150 to perform various tasks and/or actions in response to detecting various events of conditions, as further disclosed herein. The item tag data 169 may be preloaded with data describing the items that include tags 115A-N. For example, the item tag data 169 may include entries identifying the items that include tags 115A-N.

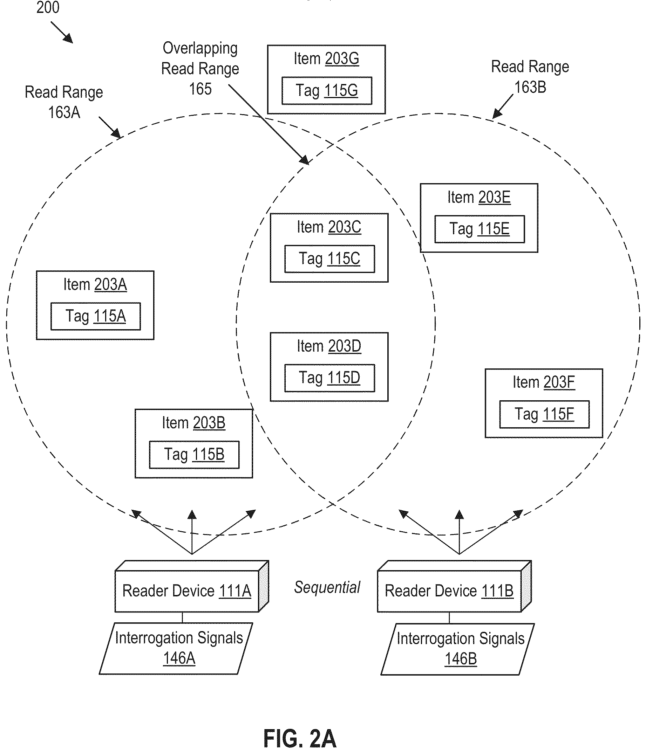

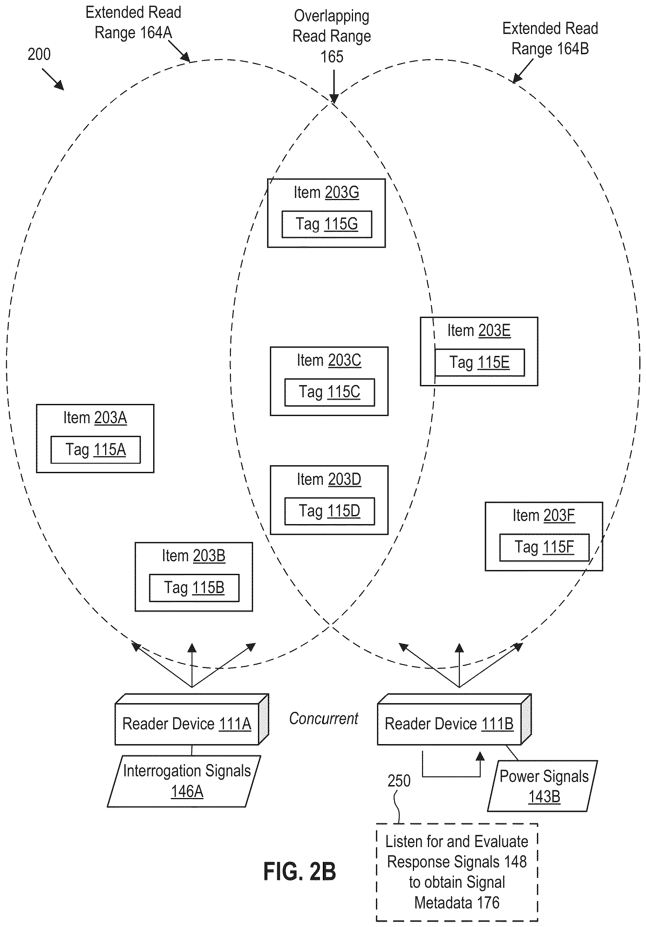

Referring now to FIGS. 2A-2B, shown are diagrams illustrating the reading of tags 115A-N using the inventory system shown in FIG. 1 according to various embodiments of the disclosure. Specifically, FIG. 2A illustrates the sequential reading of tags 115A-N in the inventory environment 103, and FIG. 2B illustrates the concurrent reading of tags 115A-N in the inventory environment 103.

Turning now specifically to FIG. 2A, shown is an inventory system 200, including reader devices 111A and 111B configured to read tags 115A, 115B, 115C, 115D, 115E, 115F, and 115G. In FIG. 2A, tag 115A is coupled to item 203A, tag 115B is coupled to item 203B, tag 115C is coupled to item 203C, tag 115D is coupled to item 203D, tag 115E is coupled to item 203E, tag 115F is coupled to item 203F, and tag 115G is coupled to item 203G. Items 203A-G and corresponding tags 115A-G are positioned within an area of the inventory environment 103.

A rule 166 programmed at the management system 106 may instruct the management application to control the reader devices 111A-B in the inventory environment 103 to first perform a sequential inventory scan individually across the reader devices 111A-B. Based on the rule 166, the management application 150 at the management system 106 may first instruct the reader devices 111A-B to perform the sequential inventory scan of the inventory environment 103. The management application 150 may instruct the reader device 111A to scan the tags 115A-D in the read range 163A of the reader device 111A. Based on the received instruction, the reader device 111A may emit interrogation signals 146A into the inventory environment 103. The reader device 111A may have a read range 163A, for example, based on the power output level and frequency channel over which the reader device 111A is capable of sending the interrogation signals 146A.

The read range 163A shown in FIG. 2A may be representative of an omnidirectional region of the inventory environment 103 positioned below the reader device 111A, in which the reader device 111A is positioned in the center of the read range 163A. However, it should be appreciated that the read range 163A may be any region of the inventory environment 103 relative to the reader device 111A over which the reader device 111A may emit interrogation signals 146A.

As shown in FIG. 2A, items 203A (with tag 115A), 203B (with tag 115B), 203C (with tag 115C), and 203D (with tag 115D) are positioned in the read range 163A of the reader device 111A, meaning that the tags 115A-D may each receive sufficient power from the interrogation signals 146A to emit back response signals 148 carrying the tag data 136 from each of the respective tags 115A-D. The reader device 111A may receive the response signals 148, evaluate the response signals 148 to calculate or extract signal metadata 176 describing the response signals 148, and transmit the tag data 136 and corresponding signal metadata 176 (describing the response signal 148 in which the tag data 136 was received) to the management system 106. For example, the reader device 111A may evaluate characteristics and attributes of the response signals 148, such as the RSSI, ToA, AoA, and phase of the response signals 148, and package the evaluated characteristics and attributes as the signal metadata 176, which may be transmitted to the management system 106 with the tag data 136.

A rule 166 programmed at the management system 106 may instruct the management application 150 to control the reader devices 111A-B in the inventory environment 103 to evaluate all received response signals 148 to obtain corresponding signal metadata 176 during the performing of the sequential inventory scan. Based on the rule 166, the management application 150 may also instruct the reader device 111B to listen for and evaluate the response signals 148 received from the tags 115A-D, even though the reader device 111B did not send the interrogation signals 146A requesting a response from the tags 115A-D. When the reader device 111B is capable of receiving the response signals 148 from the tags 115A-D in the read range 163A of the other reader device 111A (e.g., because the reader device 111B is proximate to or within a predefined distance from the reader device 111A), the reader device 111B may also evaluate the response signals 148 to calculate or extract signal metadata 176 describing the response signals 148, and transmit the tag data 136 and corresponding signal metadata 176 (describing the response signal 148 in which the tag data 136 was received) to the management system 106.

The management application 150 may then sequentially instruct all of the reader devices 111A-N in the inventory environment 103 to perform similar inventory scans within the respective read ranges 163A-B, while instructing other reader devices 111A-N to listen for and evaluate all received response signals 148 to transmit signal metadata 176 describing the response signals 148 to the management application 150. For example, after the reader device 111A has performed the inventory scan within the read range 163A and the management system 106 has received the tag data 136/signal metadata 176 associated with tags 115A-N, the management application 150 may instruct, based on the rule 166 for performing the sequential inventory scan, the reader device 111B to scan the tags 115C-F in the read range 163B of the reader device 111B. Based on the received instruction, the reader device 111B may emit interrogation signals 146B into the inventory environment 103. The reader device 111B may have a read range 163B, for example, based on the power output level and frequency channel over which the reader device 111B transmits the interrogation signals 146B.

As shown in FIG. 2A, items 203C (with tag 115C), 203D (with tag 115D), 203E (with tag 115E), and 203F (with tag 115F) are positioned in the read range 163B of the reader device 111B, meaning that the tags 115C-F may each receive sufficient power from the interrogation signals 146B to emit back response signals 148 carrying the tag data 136 from each of the respective tags 115C-F. The reader device 111B may receive the response signals 148, evaluate the response signals 148 to calculate or extract signal metadata 176 describing the response signals 148, and transmit the tag data 136 and corresponding signal metadata 176 (describing the response signal 148 in which the tag data 136 was received) to the management system 106.

The management application 150 may also instruct, based on the rule 166 for performing the sequential inventory scan, the reader device 111A to listen for and evaluate the response signals 148 received from the tags 115C-F, even though the reader device 111A did not send the interrogation signals 146B requesting a response from the tags 115C-F. When the reader device 111A is capable of receiving the response signals 148 from the tags 115C-F in the read range 163B of the other reader device 111B (e.g., because the reader device 111A is proximate to or within a predefined distance from the reader device 111B), the reader device 111A may also evaluate the response signals 148 to calculate or extract signal metadata 176 describing the response signals 148, and transmit the tag data 136 and corresponding signal metadata 176 (describing the response signal 148 in which the tag data 136 was received) to the management system 106.

Therefore, the reader devices 111A and 111B may separately send interrogation signals 146A-B into the inventory environment 103. However, the reader devices 111A and 111B may be instructed and programmed to continuously or intermittently (e.g., based on a predefined schedule) listen for response signals 148 received from any of the tags 115A-G in the inventory environment 103. As shown in FIG. 2A and described above, item 203C (with tag 115C) and item 203D (with tag 115D) are included in both the read range 163A of the first reader device 111A and the read range 163B of the second reader device 111B. Therefore, the area of the inventory environment 103 in which the tags 115C and 115D are positioned may be considered an overlapping read range 165.

The management application 150 may use the signal metadata 176 received from multiple reader devices 111A-B with regard to each of tags 115A-F (and the known locations of the reader devices 111A-B) to more accurately and precisely perform tag location detection, and/or determine a location of each of the tags 115A-F in the inventory environment 103. For example, the management application 150 may use the RSSI values for each tag 115A-F received in the signal metadata 176 from both the reader devices 111A and 111B (and the known locations of the reader devices 111A-B) to compute a more accurate signal strength-based location of each of the tags 115A-F (e.g., using signal strength-based location algorithms, artificial intelligence/machine learning-based location algorithms, etc.).

To estimate the location of tag 115A-F, the management application 150 may use the signal metadata 176, such as time of arrival, signal strength, or phase shifts, along with the known positions of the readers, associated with each of the tags 115A-F. Techniques like triangulation and trilateration may be used to calculate the location of tag 115A-F based on angles or distances derived from the signal data. Triangulation relies on the AoA, using the intersection of angles from different readers to find the location of tag 115A-F, while trilateration uses the ToA or ToF to calculate distances and determine where the distance spheres from multiple reader devices 111A-B overlap. The RSSI may also be used to estimate the tag 115A-F proximity to each reader device 111A-N, allowing location estimation through relative strength comparisons. Time Difference of Arrival (TDoA) may measure the difference in signal arrival times at multiple reader devices 111A-B to create hyperbolic curves that intersect at the location of tag 115A-F, while Phase of Arrival (PoA) compares phase shifts in the response signals 148 wave at different readers to estimate distances. Each method enables accurate location calculation based on the interplay of signal properties and reader device 111A-B positions. The determined locations of the tags 115A-F may be stored in the inventory data 170 for each of the tags 115A-F.

In an embodiment, the management application 150 may use the determined locations of the tags 115A-F to compute or verify the read range 163A-B for each of the reader devices 111B (e.g., by setting or adjusting the read range 163A-B for each of the reader devices 111B based on the determined locations of the tags 115A-B that responded to the interrogation signals 146A-B, respectively). Similarly, the management application 150 may use the determined locations of the tags 115A-F to compute or verify the overlapping read range 165 between the reader devices 111A-B (e.g., by setting or adjusting the overlapping read range 165 between the reader devices 111A-B based on the determined locations of the tags 115C-D that respond to both the interrogation signals 146A and 146B).

As shown in FIG. 2A, item 203G (with tag 115G) may be positioned outside the read range 163A of the reader device 111A and the read range 163B of the reader device 111B. Therefore, the reader device 111A does not transmit interrogation signals 146A with enough energy to power the tag 115G to respond, and similarly, the reader device 111B does not transmit interrogation signals 146B with enough energy to power the tag 115G to respond. In this case, the management may instruct at least two reader devices 111A-B (e.g., selected based on the proximity to one another) to perform a concurrent inventory scan to extend the read ranges 163A-B to possibly detect, power, and receive response signals 148 from the tag 115G.

Turning now to FIG. 2B, shown is the same inventory system 200 of FIG. 2A. However, in FIG. 2B, the management application 150 may have instructed, based on a rule 166 for performing concurrent inventory scans, the reader devices 111A to perform a concurrent inventory scan in an attempt to detect tags 115G positioned outside the read ranges 163A-B and/or within gaps between the read ranges 163A-B. The rule 166 may indicate, for example, that the management application 150 is to instruct multiple combinations of reader devices 111A-B (e.g., positioned within a predefined distance from each other) to perform a concurrent inventory after the sequential inventory scan across all the reader devices 111A-B is complete. In an embodiment, the management application 150 may select the reader devices 111A-B for concurrent inventory scanning based on whether the reader devices 111A-B are positioned within a predefined distance from one another, to ensure that the reader devices 111A-B are scanning a common general area of the inventory environment 103.

To perform a concurrent inventory scan, for example, the management application 150 may instruct the reader device 111A to transmit interrogation signals 146A (which again carry energy and the modulated signal) and instruct the reader device 111B to transmit power signals 143B (which carry energy and may not carry a modulated signal) - as shown in FIG. 2B. However, in another embodiment, the management application 150 may instead instruct the reader device 111B to transmit interrogation signals 146B (which again carry energy and the modulated signal) and instruct the reader device 111A to transmit power signals 143, or may instruct both the reader devices 111A and 111B to transmit interrogation signals 146A and 146B. As long as the management application 150 instructs at least one reader device 111A to transmit interrogation signals 146A, and instructs all other reader devices 111B to concurrently transmit power signals 143B (or interrogation signals 146B), the concurrent inventory scan may be performed to increase the read ranges 163A-B of all of the scanning reader devices 111A-B (thereby creating extended read ranges 164A-B) and to trigger all tags 115A-G within the extended read ranges 164A-B to respond.

More specifically, as shown in FIG. 2B, the concurrent transmission of signals carrying energy (via the interrogation signals 146A and the power signals 143B) serves to cumulatively increase the power of the transmissions of the reader devices 111A and 111B. The increase in power results in the extending of the read range 163A of the reader device 111A to be the extended read range 164A, and extending of the read range 163B of the reader device 111B to be the extended read range 164B. The distance by which each of the read ranges 163A-B is extended to be the extended read ranges 164A-B may be based on various factors, such as an amount of cumulative power output that is created as a result of concurrently transmitting interrogation signals 146A and one or more power signals 143A from multiple reader devices 111A-B. For example, the more reader devices 111A-B that send power signals 143B, the greater the difference between the read ranges 163A-B and the extended read ranges 164A-B

As shown in FIG. 2B, the extended read ranges 164A-B now include the area in which the item 203G (and tag 115G) are positioned, and as such, when the reader device 111A transmits the interrogation signals 146A, the tag 115G may receive enough energy to power up and emit a response signal 148 carrying the tag data 136. The reader devices 111A and 111B may both be programmed to listen for and evaluate all response signals 148 (received from all tags 115A-G), extract or compute the signal metadata 176 describing the response signals 148, and transmit the tag data 136 and signal metadata 176 to the management system 106.

The management application 150 may receive the tag data 136 and signal metadata 176 associated with the tags 115A-G from the reader devices 111A-B. The management application 150 may filter out duplicates (e.g., discard the tag data 136 and signal metadata 176 pertaining to tags 115A-F) of the data since this data may have already been obtained in the sequential inventory scan (as described above with reference to FIG. 2A). The management application 150 may then use the signal metadata 176 describing the signal response 148 received from the tag 115G (as received from multiple reader devices 111A-B) to more accurately and precisely perform tag location detection, or determining a location of tag 115G. For example, the management application 150 may use the RSSI values for tag 115G received in the signal metadata 176 from both the reader devices 111A and 111B (and the known locations of the reader devices 111A-B) to compute a more accurate signal strength-based location of each of the tags 115G (e.g., using signal strength-based location algorithms, artificial intelligence/machine learning-based location algorithms, etc.). The determined location of the tags 115G may be stored in the inventory data 170 for tag 115G.

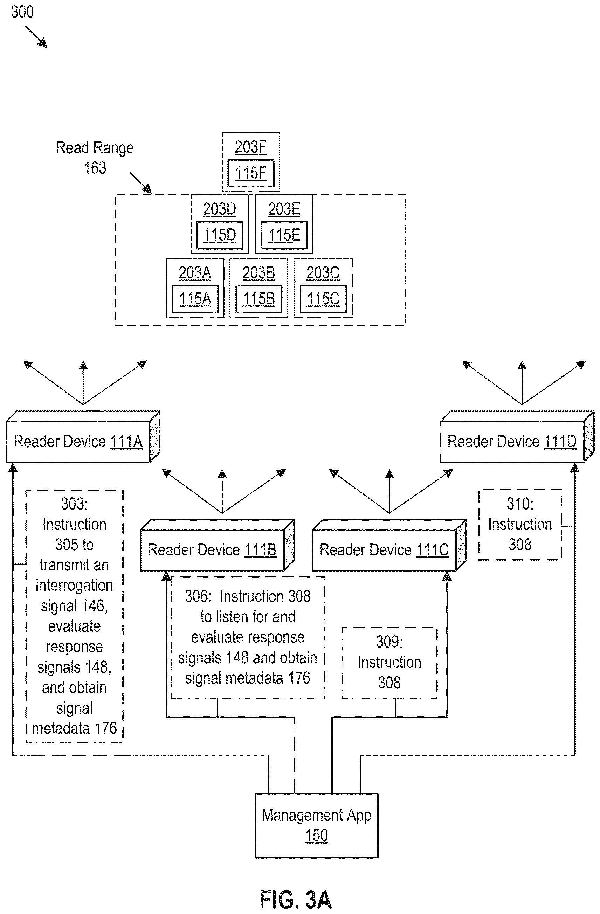

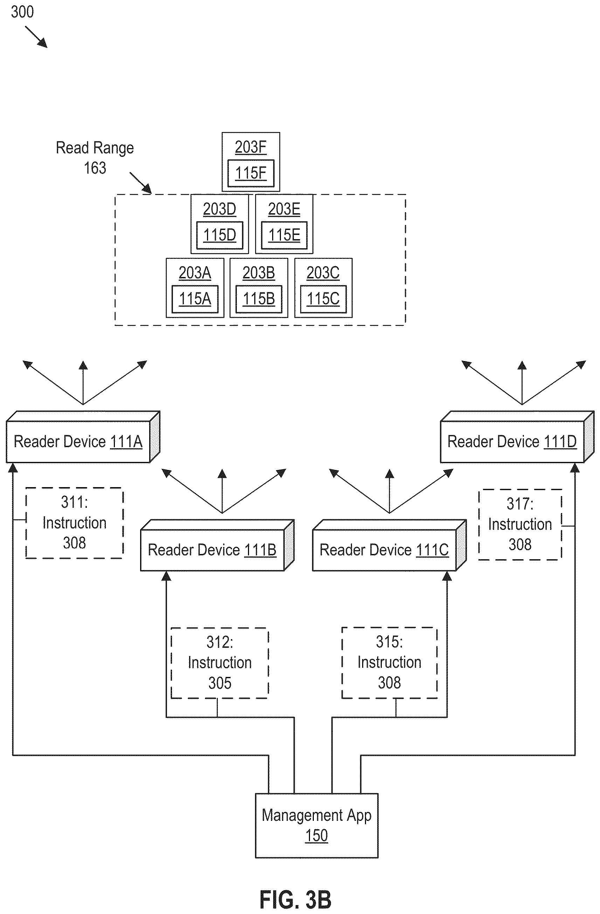

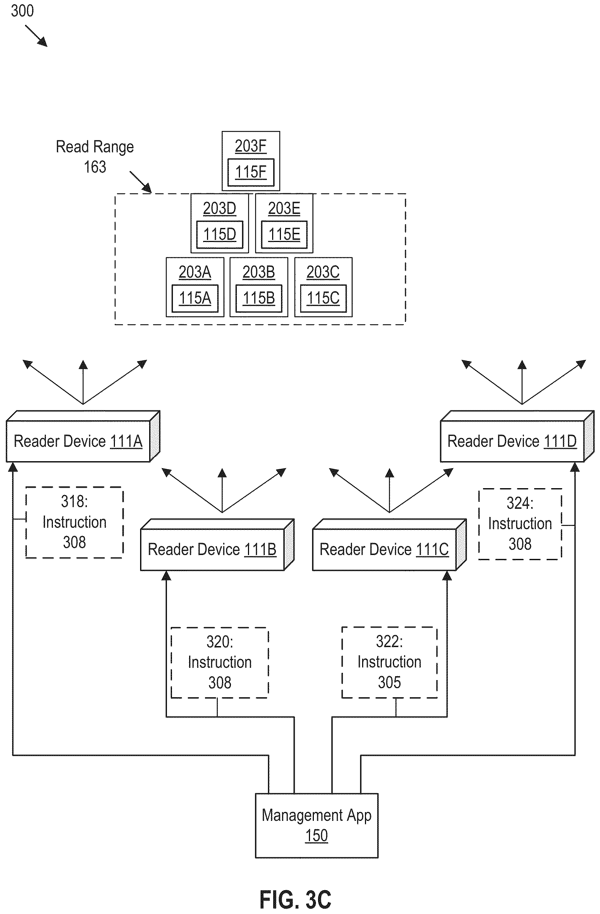

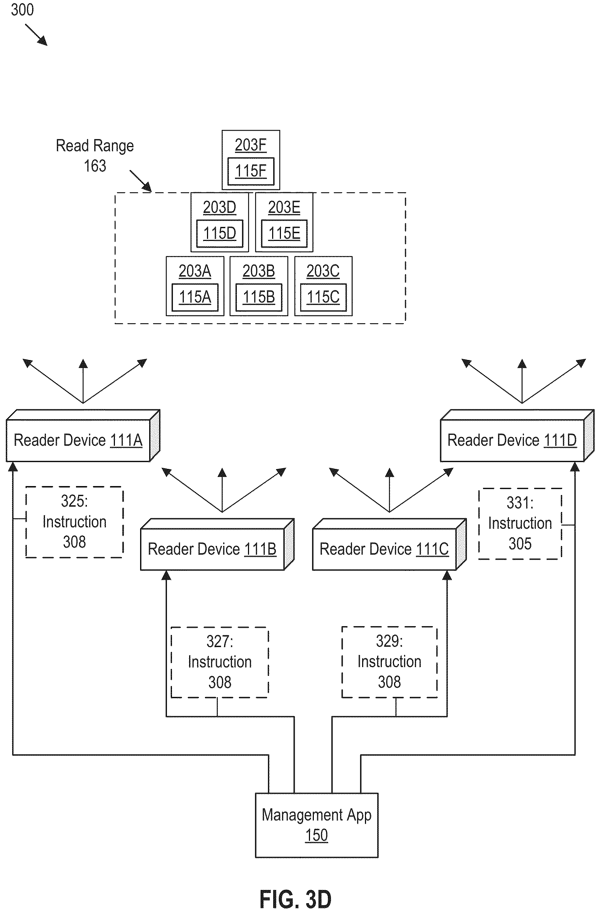

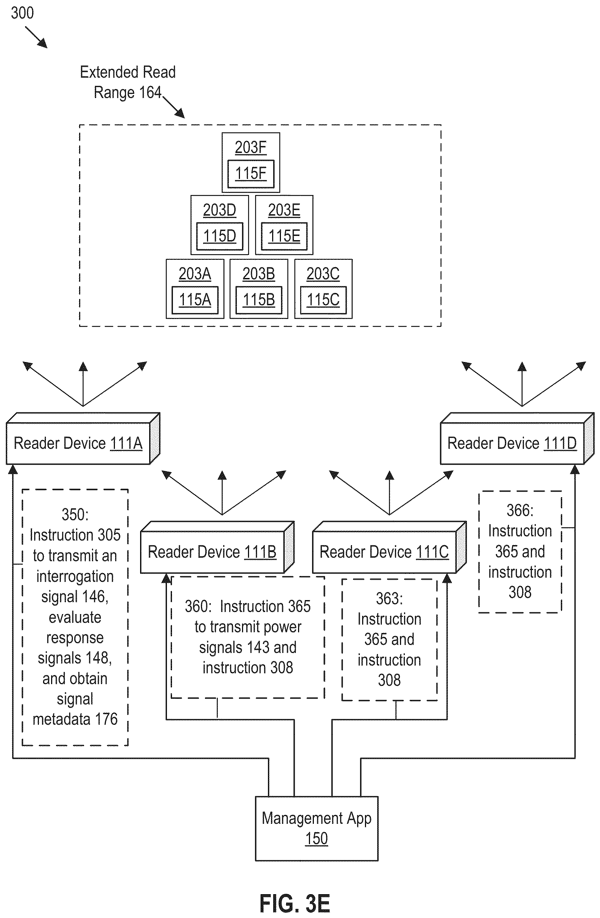

Referring now to FIGS. 3A, 3B, 3C, 3D, and 3E, shown are diagrams illustrating the reading of densely positioned tags 115A-F using the inventory system of FIG. 1 according to various embodiments of the disclosure. Specifically, FIGS. 3A-E illustrate a sequence of instructions sent by the management application 150 to multiple reader devices 111A-D to first perform sequential inventory scanning and then perform concurrent inventory scanning.

Turning now to FIG. 3A, shown is an inventory system 300 including reader devices 111A, 111B, 111C, and 111D. The inventory environment 103 includes item 203A (with tag 115A), item 203B (with tag 115B), item 203C (with tag 115C), item 203D (with tag 115D), item 203E (with tag 115E), and item 203F (with tag 115F). Each of the reader devices 111A-D may be positioned proximate to one another, or within a predefined distance from one another, such that each of the reader devices 111A-D have a common read range 163. The items 203A-E and corresponding tags 115A-E are positioned within the read range 163.

The management application 150 may begin operating based on a rule 166, instructing the management application 150 to perform a sequential inventory scan by controlling the reader devices 111A-D to individually transmit interrogation signals 146 and evaluate all incoming response signals 148. At operation 303, the management application 150 may transmit, based on a rule 166, an instruction 305 to the reader device 111A. The instruction 305 may be for the reader device 111A to transmit an interrogation signal 146 into the inventory environment 103 to read the tags 115A-E within the read range 163. The instruction 305 may also be for the reader device 111A to listen for and evaluate all response signals 148 received from the tags 115A-E.

Simultaneously, concurrently, or within a predefined period (e.g., a few milliseconds or seconds) of transmitting the instruction 305 to the reader device 111A, the management application 150 may perform operations 306, 309, and 310 based on the rule 166. At operation 306, the management application 150 may transmit an instruction 308 to the reader device 111B. The instruction 308 may be for the reader device 111B to listen for and evaluate response signals 148 received from the tags 115A-E. At operation 309, the management application 150 may transmit an instruction 308 to the reader device 111C. The instruction 308 may be for the reader device 111C to listen for and evaluate response signals 148 received from the tags 115A-E. At operation 310, the management application 150 may transmit an instruction 308 to the reader device 111D. The instruction 308 may be for the reader device 111D to listen for and evaluate response signals 148 received from the tags 115A-E.

Once the management application 150 has performed operations 303, 306, 309, and 310 for the reader devices 111A-D to perform a first sequential iteration of inventory scanning, the management application 150 may wait to receive, from each of the reader devices 111A-D, tag data 136 and signal metadata 176 (describing attributes of the response signals 148 received from each of the tags 115A-E).

A rule 166 may instruct the management application 150 to determine a location of each of the tags 115A-E based on the signal metadata 176 of each of the tags 115A-E received from the reader devices 111A-D. Based on the rule 166, the management application 150 may determine a location of each of the tags 115A-E based on the signal metadata 176 associated with each of the tags 115A-E and received by each of the reader devices 111A-D. The management application 150 may then store the tag data 136 and the determined locations in the inventory data 170 for each tag 115A-E.

Turning now to FIG. 3B, shown is the same inventory environment 300 of FIG. 3A. However, in FIG. 3B, the management application 150 may perform the second sequential iteration of inventory scanning based on the rule 166 by instructing the second reader device 111B to perform the inventory scan while all the other reader devices 111A and 111C-D to listen for and evaluate response signals 148 from tags 115A-E. The management application 150 may simultaneously, concurrently, or within a predefined period of time, perform operations 311, 312, 315, and 317 based on the rule 166.

At operation 311, the management application 150 may transmit an instruction 308 to the reader device 111A. The instruction 308 may be for the reader device 111A to listen for and evaluate response signals 148 received from the tags 115A-E. At operation 312, the management application 150 may transmit an instruction 305 to the reader device 111B. The instruction 305 may be for the reader device 111B to transmit an interrogation signal 146 into the inventory environment 103 to read the tags 115A-E within the read range 163. The instruction 305 may also be for the reader device 111B to listen for and evaluate all response signals 148 received from the tags 115A-E. At operation 315, the management application 150 may transmit an instruction 308 to the reader device 111C. The instruction 308 may be for the reader device 111C to listen for and evaluate response signals 148 received from the tags 115A-E. At operation 317, the management application 150 may transmit an instruction 308 to the reader device 111D. The instruction 308 may be for the reader device 111D to listen for and evaluate response signals 148 received from the tags 115A-E.

As mentioned above, the management application 150 may then determine, based on a rule 166, a location of each of the tags 115A-E based on the signal metadata 176 associated with each of the tags 115A-E and received by each of the reader devices 111A-D. The management application 150 may then store the tag data 136 and the determined locations in the inventory data 170 for each tag 115A-E.

Turning now to FIG. 3C, shown is the same inventory environment 300 of FIGS. 3A-B. However, in FIG. 3C, the management application 150 may perform the third sequential iteration of inventory scanning according to the rule 166 by instructing the third reader device 111C to perform the inventory scan while all the other reader devices 111AB and 111D to listen for and evaluate response signals 148 from tags 115A-E. The management application 150 may simultaneously, concurrently, or within a predefined period of time, perform operations 318, 320, 322, and 324 based on the rule 166.

At operation 318, the management application 150 may transmit an instruction 308 to the reader device 111A. The instruction 308 may be for the reader device 111A to listen for and evaluate response signals 148 received from the tags 115A-E. At operation 320, the management application 150 may transmit an instruction 308 to the reader device 111B. The instruction 308 may be for the reader device 111B to listen for and evaluate response signals 148 received from the tags 115A-E. At operation 322, the management application 150 may transmit an instruction 305 to the reader device 111C. The instruction 305 may be for the reader device 111C to transmit an interrogation signal 146 into the inventory environment 103 to read the tags 115A-E within the read range 163. The instruction 305 may also be for the reader device 111C to listen for and evaluate all response signals 148 received from the tags 115A-E. At operation 324, the management application 150 may transmit an instruction 308 to the reader device 111D. The instruction 308 may be for the reader device 111D to listen for and evaluate response signals 148 received from the tags 115A-E.

As mentioned above, the management application 150 may then determine, based on the rule, a location of each of the tags 115A-E based on the signal metadata 176 associated with each of the tags 115A-E and received by each of the reader devices 111A-D. The management application 150 may then store the tag data 136 and the determined locations in the inventory data 170 for each tag 115A-E.

Turning now to FIG. 3D, shown is the same inventory environment 300 of FIGS. 3A-C. However, in FIG. 3D, the management application 150 may perform the fourth sequential iteration of inventory scanning according to the rule 166 by instructing the fourth reader device 111D to perform the inventory scan while all the other reader devices 111A-C to listen for and evaluate response signals 148 from tags 115A-E. The management application 150 may simultaneously, concurrently, or within a predefined period of time, perform operations 325, 327, 329, and 331, based on the rule 166.

At operation 325, the management application 150 may transmit an instruction 308 to the reader device 111A. The instruction 308 may be for the reader device 111A to listen for and evaluate response signals 148 received from the tags 115A-E. At operation 327, the management application 150 may transmit an instruction 308 to the reader device 111B. The instruction 308 may be for the reader device 111B to listen for and evaluate response signals 148 received from the tags 115A-E. At operation 329, the management application 150 may transmit an instruction 308 to the reader device 111C. The instruction 308 may be for the reader device 111C to listen for and evaluate response signals 148 received from the tags 115A-E. At operation 331, the management application 150 may transmit an instruction 305 to the reader device 111D. The instruction 305 may be for the reader device 111D to transmit an interrogation signal 146 into the inventory environment 103 to read the tags 115A-E within the read range 163. The instruction 305 may also be for the reader device 111D to listen for and evaluate all response signals 148 received from the tags 115A-E.

As mentioned above, the management application 150 may then determine, based on the rule 166, a location of each of the tags 115A-E based on the signal metadata 176 associated with each of the tags 115A-E and received by each of the reader devices 111A-D. The management application 150 may then store the tag data 136 and the determined locations in the inventory data 170 for each tag 115A-E.

In this example, the sequential inventory scan of the reader devices 111A-D may be completed when all of the reader devices 111A-D have scanned the read range 163 for the tags 115A-E that respond, and transmitted the relevant data back to the management system 106. In some embodiments, after the sequential inventory scan is complete, the management application 150 may be programmed to either automatically trigger the concurrent inventory scanning in the inventory environment 103 or only trigger the concurrent inventory scanning in response to detecting certain conditions according to various rules 166. For example, when a rule 166 indicates that the management application 150 is to automatically trigger the concurrent inventory scanning in the inventory environment 103, the management application 150 may instruct the performance of the concurrent inventory scan by instructing various combinations of two or more reader devices 111A-N positioned proximate to one another or within a predefined distance from one another to perform a concurrent inventory scan, to search for tags 115F that may have not been detected during the sequential inventory scan. Additionally or alternatively, when a rule 166 indicates that the management application 150 is to only trigger the concurrent inventory scanning in response to detecting certain conditions, the management application 150 may instruct the performance of the concurrent inventory scan only when a condition prescribed in the rule 166 is satisfied. For example, the rule 166 may indicate that management application 150 is to instruct the performance of the concurrent inventory scan when a quantity of tags 115A-G previously detected by the reader devices 111A-D is greater than a quantity of tags 115A-E detected during the sequential inventory scan of FIGS. 3A-3D.

Turning now to FIG. 3E, shown is the same inventory environment 300 of FIGS. 3A-D. However, in FIG. 3E, the management application 150 may perform concurrent inventory scanning, according to a rule 166, by instructing at least two reader devices (e.g., the reader devices 111A-D) to perform the inventory scan and instructing all the reader devices 111A-D to listen for and evaluate response signals 148 from tags 115A-F. The management application 150 may simultaneously, concurrently, or within a predefined period of time, perform operations 350, 360, 363, and 366 based on a rule 166.

At operation 350, the management application 150 may transmit the instruction 305 to the reader device 111A. The instruction 305 may be for the reader device 111A to transmit an interrogation signal 146 into the inventory environment 103 to read the tags 115A-F within the read range 163. As mentioned herein, the interrogation signal 146 carries both power (e.g., in the form of an electromagnetic wave) and data/commands (e.g., in the form of modulated data carried on top of the electromagnetic wave). The instruction 305 may also be for the reader device 111A to listen for and evaluate all response signals 148 received from the tags 115A-F.

Simultaneously, concurrently, or within a predefined period (e.g., a few milliseconds or seconds) of transmitting the instruction 305 to the reader device 111A, the management application 150 may perform operations 360, 363, and 366 based on the rule 166. At operation 360, the management application 150 may transmit instructions 365 and 308 to the reader device 111B. The instruction 365 may be for the reader device 111B to transmit power signals 143 (e.g., without modulated data or commands) into the area of the inventory environment 103. The instruction 308 may be for the reader device 111B to listen for and evaluate response signals 148 received from the tags 115A-F. At operation 363, the management application 150 may transmit instructions 365 and 308 to the reader device 111C. The instruction 365 may be for the reader device 111C to transmit power signals 143 (e.g., without modulated data or commands) into the area of the inventory environment 103. The instruction 308 may be for the reader device 111C to listen for and evaluate response signals 148 received from the tags 115A-F. At operation 366, the management application 150 may transmit instructions 365 and 308 to the reader device 111D. The instruction 365 may be for the reader device 111D to transmit power signals 143 (e.g., without modulated data or commands) into the area of the inventory environment 103. The instruction 308 may be for the reader device 111D to listen for and evaluate response signals 148 received from the tags 115A-F.

Once the management application 150 has performed operations 350, 360, 363, and 366 for the reader devices 111A-D to the concurrent inventory scanning, the management application 150 may wait to receive, from each of the reader devices 111A-D, tag data 136 and signal metadata 176 (describing attributes of the response signals 148 received from each of the tags 115A-F). Notably, the data received from the reader devices 111A-D may include tag data 136 from the tag 115F and the signal metadata 176 describing the response signal 148 received from the tag 115F. The management application 150 may filter out (e.g., discard, ignore) the tag data 136 and signal metadata 176 pertaining to tags 115A-E, since this data was already received and processed in the concurrent inventory scanning defined above with reference to FIGS. 3A-3D. After the filtering, the management application 150 may determine a location of tag 115F based on the signal metadata 176 associated with tag 115F and received by each of the reader devices 111A-D. The management application 150 may then store the tag data 136 and the determined locations in the inventory data 170 for the tag 115F.

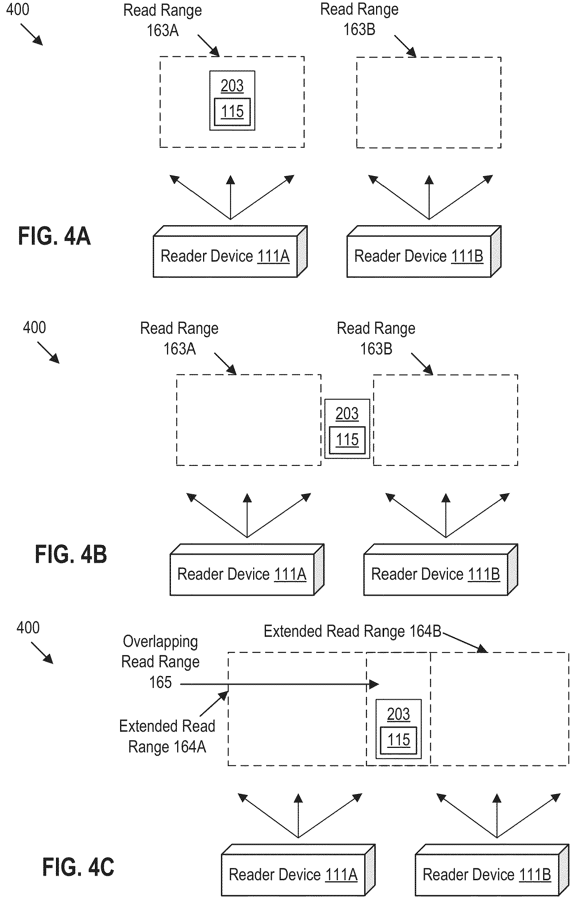

Referring now to FIGS. 4A, 4B, and 4C, shown are diagrams illustrating the reading of a moving tag 115 according to various embodiments of the disclosure. Specifically, FIG. 4A illustrates the location detection of a tag 115 at a first time, FIG. 4B illustrates the location detection of the tag 115 at a second, subsequent time, and FIG. 4C illustrates the location detection of the tag 115 at a third, further subsequent time.

In an embodiment, the moving tag 115 identified in FIGS. 4A-4C may be identified in a request received via a user interface of the management system 105 (with an indication that the moving tag 115 has gone missing). The request may include an identifier of the moving tag 115. The tag data 136 of the moving tag 115 may include the identifier. In an embodiment, the moving tag 115 may be coupled to a high value item (e.g., an item having a value (price/cost) higher than a predefined threshold).

Turning now specifically to FIG. 4A, shown is an inventory system 400 at a first time, including reader devices 111A and 111B and tag 115. The example illustrated in FIG. 4A only shows one item 203 (with one tag 115) positioned in the read range 163A of the reader device 111A, while the read range 163B of the reader device 111B does not include any items 203 or tags 115. However, it should be appreciated that any number of items 203/tags 115 may be positioned in a read range 163A-B of a reader device 111A-B.

In operation, the management application 150 may instruct the reader device 111A to perform a sequential inventory scan according to a rule 166, to obtain data regarding tags 115 within the read range 163A of the reader device 111A. During the sequential inventory scan, the reader device 111A may receive a signal response 148 carrying tag data 136 from the tag 115, obtain signal metadata 176 describing the signal response 148, and transmit the tag data 136 and signal metadata 176 to the management system 106. The management application 150 at the management system 106 may determine a location of the tag 115 based on the signal metadata 176 and other known data (e.g., the known location of the reader device 111A, the known read range 163A of the reader device 111A, etc.).

In some embodiments, the reader devices 111A-B may be programmed, according to one or more rules 166, to perform sequential inventory scans continuously or periodically (e.g., according to a predefined schedule included in a rule 166). That is, the reader device 111A may be programmed to continuously or iteratively scan the read range 163A, and the reader device 111B may be programmed to continuously or iteratively scan the read range 163B.

Turning now to FIG. 4B, shown is the inventory system 400 at a second time subsequent to the first time. At the second time, the reader devices 111A-B may be programmed to perform a subsequent, sequential inventory scan of the read ranges 163A-B to verify the location of the tags 115 in the read ranges 163A-B, track the movement of the tags 115 within the inventory environment 103, and/or record when and where tags 115 and corresponding items 203 have exited the inventory environment 103.

As shown in FIG. 4B, the item 203 and corresponding tag 115 have moved into an area of the inventory environment 103 not presently covered in a read range 163A of the reader device 111A or the read range 163B of the reader device 111B. That is, the item 203 and tag 115 have moved to a gap between read ranges 163A-B in the inventory environment 103, and thus, the reader devices 111A-B may not be capable of detecting or reading the tag 115 using the sequential inventory scan. For example, the reader device 111A may transmit interrogation signals 146 into the read range 163A, but no tags 115 will respond to the reader device 111A since no tags 115 are present in the read range 163A. Similarly, the reader device 111B may transmit interrogation signals 146 into the read range 163B, but no tags 115 will respond to the reader device 111B since no tags 115 are present in the read range 163B.

A rule 166 may indicate that the management application 150 instruct certain reader devices 111A-B to perform a concurrent inventory scan in response to detecting a condition in which a tag 115 is detected in a read range 163A at a first time, but not detected in any read range 163B at a second, subsequent time. As in this case, the condition has been met, and the management application 150 may be triggered to instruct the reader devices 111A-B to concurrently transmit signals (in an embodiment, one reader device 111A-B transmits an interrogation signal 146, and all the other reader devices 111A-B transmit power signals 143).

Turning now to FIG. 4C, shown is the inventory system 400 at a third time subsequent to the second time. At the third time, the reader devices 111A-B may have received the instructions from the management application 150 to perform the concurrent inventory scan in the area of the inventory environment 103. For example, the reader device 111A may have received an instruction from the management application 150 to transmit an interrogation signal 146, and the reader device 111B may have received an instruction from the management application 150 to transmit a power signal 143. The instructions may indicate that the reader device 111A and the reader device 111B are to transmit the interrogation signals 146 and power signals 143 simultaneously or concurrently, in a synchronized manner, such that the energy in both the interrogation signals 146 and the power signals 143 creates a cumulative power effect (e.g., increasing the power of the interrogation signals 146 and the power signals 143 without actually adjusting a configuration 151 (e.g., power output levels) of the reader devices 111A-B).

By increasing the power of the interrogation signals 146 and the power signals 143, the original read ranges 163A-B of the reader devices 111A-B are extended to the extended read ranges 164A-B, including an overlapping read range 165. The item 203 and corresponding tag 115 may be positioned in the extended read range 164A of the reader device 111A, the extended read range 164B, and the overlapping read range 165. In this way, the tag 115 may respond to the interrogation signals 146 sent by the reader device 111A, and emit response signals 148 carrying tag data 136. Both of the reader devices 111A-B may be programmed to listen for and evaluate the response signals 148 received from the tag 115 to obtain signal metadata 176, and transmit the tag data 136 and the signal metadata 176 to the management system 106. The management application 150 may then determine a location of the tag 115 using the signal metadata 176 received from both reader devices 111A-B and known data (e.g., locations of the reader devices 111A-B).

The management application 150 may also compare the location of the tag 115 determined based on the first time with the location of the tag 115 determined at the second time, to determine that the tag 115 is moving in a particular direction trajectory. The management application 150 may then continue to sequentially instruct multiple other reader devices 111 in the direction of movement of the reader device 111B to perform individual inventory scans in the respective read ranges 163 to track the movement of the tag 115. When the tag 115 is not detected in the sequential inventory scan, the management application 150 may instruct at least two reader devices 111 (positioned in the trajectory of the moving item 203) to perform a concurrent inventory scan. When the tag 115 is not detected in either a sequential inventory scan or a concurrent inventory scan, the management application 150 may record a last known location of the tag 115 with an indication that the tag 115 has likely left the inventory environment 103, or is positioned in a manner that renders the tag 115 undetectable by the reader devices 111.

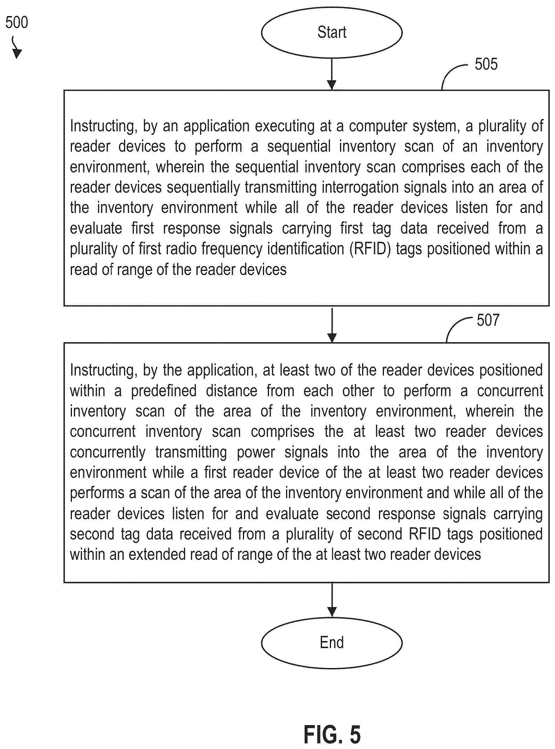

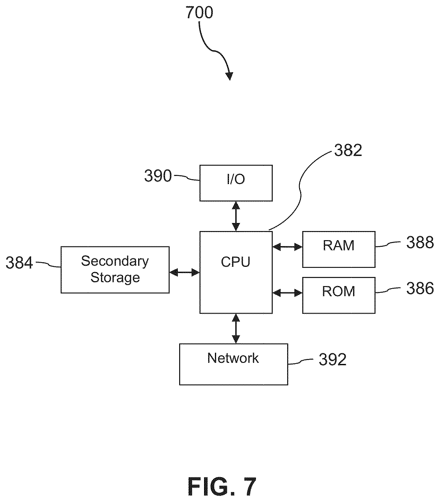

Turning now to FIG. 5, shown is a method 500 of inventory system coordination using the inventory system of FIG. 1 according to various embodiments of the disclosure. In embodiments, the method 500 may be implemented using a computer system with components as shown in FIG. 7. As illustrated, method 500 of FIG. 5 includes a number of enumerated operations, but embodiments of the operations in FIG. 5 may include additional operations before, after, and in between the enumerated operations. In some embodiments, one or more of the enumerated operations may be omitted or performed in a different order. Method 500 may be performed by an application executing at a computer system, and the application may refer to the management application 150 at the management system 106 and/or the application 118 at the reader devices 111.

At step 505, method 500 comprises instructing, by an application executing at a computer system (e.g., the management application 150 and/or the application 118), a plurality of reader devices 111 to perform a sequential inventory scan of an inventory environment 103. In an embodiment, the sequential inventory scan comprises each of the reader devices 111 sequentially transmitting interrogation signals 146 into an area of the inventory environment 103 while all of the reader devices 111 listen for and evaluate first response signals 148 carrying first tag data 136 received from first RFID tags 115 positioned within a read of range 163 of the reader devices 111. At step 507, method 500 comprises instructing, by the application, at least two of the reader devices 111 positioned within a predefined distance from each other to perform a concurrent inventory scan of the area of the inventory environment 103. The concurrent inventory scan comprises the at least two reader devices 111 concurrently transmitting power signals 143 into the area of the inventory environment 103 while a first reader device 111 of the at least two reader devices 111 performs a scan of the area of the inventory environment 103 and while all of the reader devices 111 listen for and evaluate second response signals 148 carrying second tag data 136 received from second RFID tags positioned within an extended read of range 164 of the at least two reader devices 111.

Method 500 may further comprise additional attributes and/or steps not explicitly shown in FIG. 5. In an embodiment, to perform the scan of the area of the inventory environment 103, the first reader device 111 of the at least two reader devices 111 transmits second inventory signals 146 into the area of the inventory environment 103. In an embodiment, the read range 163 of the reader devices 111 comprises a region of the inventory environment 103 in which the first RFID tags 115 receive sufficient energy from the interrogation signals 146 to power the first RFID tags 115 and emit the first response signals 148. In an embodiment, the extended read range 164 of the at least two reader devices 111 is a second region of the inventory environment 103 encompassing of the read range 163 of the at least two reader devices 111, and the extended read range 164 is a directionally or omnidirectionally extended area around the read range 163 of the at least two reader devices 111.

In an embodiment, method 500 may further comprise receiving, by the application, the first tag data 136 and first signal metadata 176 from each of the reader devices 111, in which the first signal metadata 176 received from each of the reader devices 111 is different, and determining, by the application, a first location of the first RFID tags 115 based on the first signal metadata 176 received from each of the reader devices. In an embodiment, method 500 may further comprise receiving, by the application, the second tag data 136 and second signal metadata 176 from each of the reader devices 111, in which the second signal metadata 176 received from each of the reader devices is different, and/or filtering, by the application, the second tag data 136 and the second signal metadata 176 to remove the first tag data 136 and the first signal metadata 176, and/or determining, by the application, a second location of the second RFID tags 115 based on the second signal metadata 176 received from each of the reader devices 111.

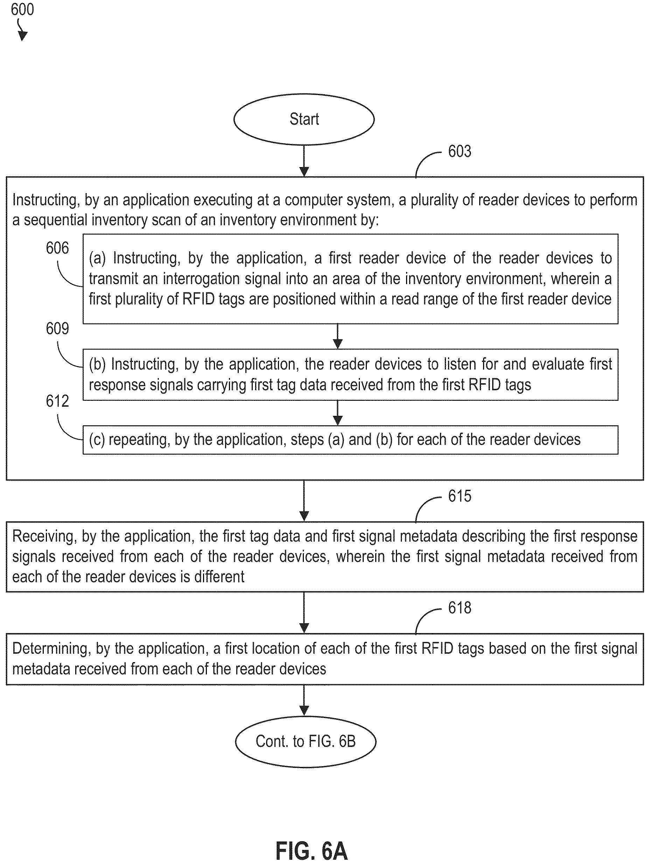

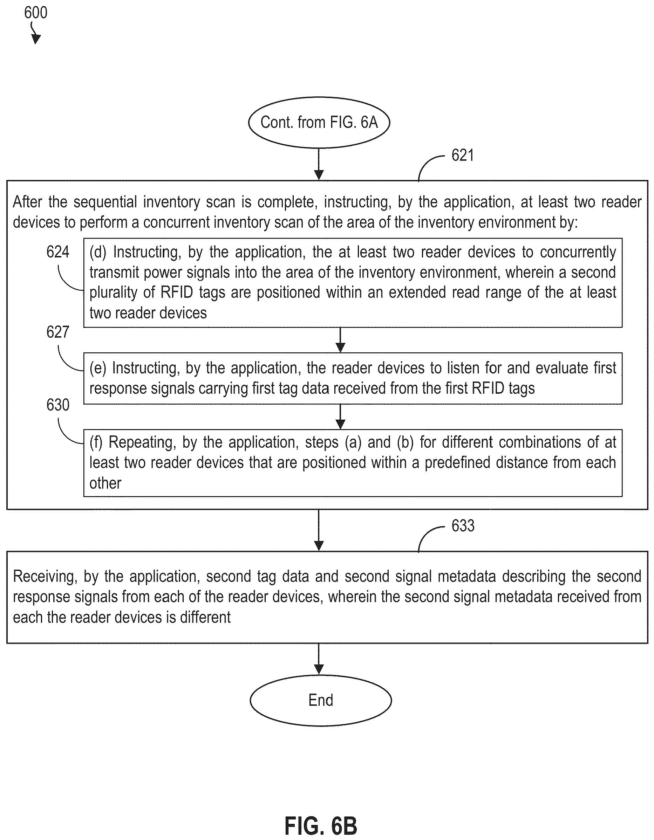

Turning now to FIGS. 6A and 6B, shown is a method 600 of inventory system coordination using the inventory system of FIG. 1 according to various embodiments of the disclosure. Specifically, method 600 may be for inventory system coordination to extend read ranges 163 of reader devices 111 and increase a precision of RFID tag location detection in an inventory environment 103. In embodiments, the method 600 may be implemented using a computer system with components as shown in FIG. 7. As illustrated, method 600 of FIG. 6 includes a number of enumerated operations, but embodiments of the operations in FIG. 6 may include additional operations before, after, and in between the enumerated operations. In some embodiments, one or more of the enumerated operations may be omitted or performed in a different order. Method 600 may be performed by an application executing at a computer system, and the application may refer to the management application 150 at the management system 106 and/or the application 118 at the reader devices 111.

Referring specifically now to FIG. 6A, method 600 begins with step 603 shown in FIG. 6A. At step 603, method 600 comprises instructing, by an application (e.g., application 150 and/or application 118) executing at a computer system, a plurality of reader devices 111 to perform a sequential inventory scan of an inventory environment 103 by, at step 606, (a) instructing, by the application, a first reader device 111 of the reader devices 111 to transmit an interrogation signal 146 into an area of the inventory environment 103, in which first RFID tags 115 and are positioned within a read range 163 of the first reader device 111, at step 609, (b) instructing, by the application, the reader devices 111 to listen for and evaluate first response signals 148 carrying first tag data 136 received from the first RFID tags 115, and at step 612, (c) repeating, by the application, steps (a) and (b) for each of the reader devices 111.

At step 615, method 600 comprises receiving, by the application, the first tag data 136 and first signal metadata 176 describing the first response signals 148 received from each of the reader devices 111. In an embodiment, the first signal metadata 176 received from each of the reader devices 111 is different. At step 618, method 600 comprises determining, by the application, a first location of each of the first RFID tags 115 based on the first signal metadata 176 received from each of the reader devices 111.

Turning now to FIG. 6B, method 600 continues with step 621 shown in FIG. 6B. At step 621, after the sequential inventory scan is complete, method 600 comprises instructing, by the application, at least two reader devices 111 to perform a concurrent inventory scan of the area of the inventory environment 103 by, at step 624, (d) instructing, by the application, the at least two reader devices 111 to concurrently transmit power signals 143 into the area of the inventory environment 103, in which the second RFID tags 115 are positioned within an extended read range 164 of the at least two reader devices 111, at step 627, (e) instructing, by the application, the reader devices 111 to listen for and evaluate second response signals 148 received from the second RFID tags 115, and at step 630 (f) repeating, by the application, steps (a) and (b) for different combinations of at least two reader devices 111 that are positioned within a predefined distance from each other. At step 633, method 600 comprises receiving, by the application, second tag data 136 and second signal metadata 176 describing the second response signals 148 from each of the reader devices 111, in which the second signal metadata 176 received from each of the reader devices 111 is different.

Method 600 may further comprise additional attributes and/or steps not explicitly shown in FIG. 6. In an embodiment, method 600 further comprises filtering, by the application, the second tag data 136 and the second signal metadata 176 to remove the first tag data 136 and the first signal metadata 176 associated with the first RFID tags 115, and/or after the filtering, determining, by the application, a second location of each of the second RFID tags 115 based on the second signal metadata 176 received from each of the reader devices 111.

In an embodiment, the first signal metadata 176 comprises a first phase of the first response signal 148, a first RSSI of the first response signal 148, a first time of arrival of the first response signal 148, or a first angle of arrival of the first response signal 148, and wherein the second signal metadata 176 comprises a second phase of the second response signal 148, a second RSSI of the second response signal 148, a second time of arrival of the second response signal 148, or a second angle of arrival of the second response signal 148. In an embodiment, method 600 may further comprise storing, by the application, in a data store 156, the first tag data 136 and the first signal metadata 176 received from each of the reader devices 111, and storing, by the application, in the data store 156, the second tag data 136 and the second signal metadata 176 received from each of the reader devices 111. In an embodiment, the power signals 143, when transmitted concurrently by the at least two reader devices 111, cumulatively increase a read range 163 of the at least two reader devices 111 to be the extended read range 164 of the at least two reader devices 111.

FIG. 7 illustrates a computer system 700 suitable for implementing one or more embodiments disclosed herein. In an embodiment, the management system 106, reader devices 111, and/or reader devices 113, etc., may each be implemented as the computer system 700. The computer system 700 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 700, at least one of the CPU 382, the RAM 388, and the ROM 386 are changed, transforming the computer system 700 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 700 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC), and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 700 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 700 to provide the functionality of a number of servers that is not directly bound to the number of computers in the computer system 700. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third-party provider. Some cloud computing environments may comprise cloud computing resources owned and operated by the enterprise as well as cloud computing resources hired and/or leased from a third-party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 700, at least portions of the contents of the computer program product to the secondary storage 384, to the ROM 386, to the RAM 388, and/or to other non-volatile memory and volatile memory of the computer system 700. The processor 382 may process the executable instructions and/or data structures in part by directly accessing the computer program product, for example by reading from a CD-ROM disk inserted into a disk drive peripheral of the computer system 700. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 700.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 700 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the disclosure herein.

## Claims

1. A method of inventory system coordination to extend read ranges of a plurality of reader devices and increase a precision of radio frequency identification (RFID) tag location detection in an inventory environment, wherein the method comprises:
instructing, by an application executing at a computer system, a plurality of reader devices to perform a sequential inventory scan of an inventory environment by:
(a) instructing, by the application, a first reader device of the reader devices to transmit an interrogation signal into an area of the inventory environment, wherein a first plurality of radio frequency identification (RFID) tags are positioned within a read range of the first reader device;
(b) instructing, by the application, the reader devices to listen for and evaluate first response signals carrying first tag data received from the first RFID tags; and
(c) repeating, by the application, steps (a) and (b) for each of the reader devices;
receiving, by the application, the first tag data and first signal metadata describing the first response signals received from each of the reader devices, wherein the first signal metadata received from each of the reader devices is different;
determining, by the application, a first location of each of the first RFID tags based on the first signal metadata received from each of the reader devices;
after the sequential inventory scan is complete, instructing, by the application, at least two reader devices to perform a concurrent inventory scan of the area of the inventory environment by:
(d) instructing, by the application, the at least two reader devices to concurrently transmit power signals into the area of the inventory environment, wherein a second plurality of RFID tags are positioned within an extended read range of the at least two reader devices;
(e) instructing, by the application, the reader devices to listen for and evaluate second response signals received from the second RFID tags; and
(f) repeating, by the application, steps (a) and (b) for different combinations of at least two reader devices that are positioned within a predefined distance from each other; and
receiving, by the application, second tag data and second signal metadata describing the second response signals from each of the reader devices, wherein the second signal metadata received from each of the reader devices is different.

2. The method of claim 1, further comprising filtering, by the application, the second tag data and the second signal metadata to remove the first tag data and the first signal metadata associated with the first RFID tags, optionally wherein after the filtering, the method further comprises determining, by the application, a second location of each of the second RFID tags based on the second signal metadata received from each of the reader devices.

3. The method of claim 1 or 2, wherein the first signal metadata comprises a first phase of the first response signals, a first received signal strength indicator (RSSI) of the first response signals, a first time of arrival of the first response signals, or a first angle of arrival of the first response signals, and wherein the second signal metadata comprises a second phase of the second response signals, a second RSSI of the second response signals, a second time of arrival of the second response signals, or a second angle of arrival of the second response signals.

4. The method of any preceding claim, further comprising:
storing, by the application, in a data store, the first tag data and the first signal metadata received from each of the reader devices; and
storing, by the application, in the data store, the second tag data and the second signal metadata received from each of the reader devices.

5. The method of any preceding claim, wherein the power signals, when transmitted concurrently by the at least two reader devices, cumulatively increase a read range of the at least two reader devices to be the extended read range of the at least two reader devices.

6. A method comprising:
instructing, by an application executing at a computer system, a plurality of reader devices to perform a sequential inventory scan of an inventory environment, wherein the sequential inventory scan comprises each of the reader devices sequentially transmitting interrogation signals into an area of the inventory environment while all of the reader devices listen for and evaluate first response signals carrying first tag data received from a plurality of first radio frequency identification (RFID) tags positioned within a read of range of the reader devices; and
instructing, by the application, at least two of the reader devices positioned within a predefined distance from each other to perform a concurrent inventory scan of the area of the inventory environment, wherein the concurrent inventory scan comprises the at least two of the reader devices concurrently transmitting power signals into the area of the inventory environment while a first reader device of the at least two of the reader devices performs a scan of the area of the inventory environment and while all of the reader devices listen for and evaluate second response signals carrying second tag data received from a plurality of second RFID tags positioned within an extended read of range of the at least two of the reader devices.

7. The method of claim 6, wherein to perform the scan of the area of the inventory environment, the first reader device of the at least two of the reader devices transmits second interrogation signals into the area of the inventory environment.

8. The method of claim 6 or 7, wherein the read range of the reader devices comprises a region of the inventory environment in which the first **RFID** tags receive sufficient energy from the interrogation signals to power the first **RFID** tags and emit the first response signals; and
the extended read range of the at least two of the reader devices is a second region of the inventory environment encompassing of the read range of the at least two of the reader devices, wherein the extended read range is a directionally or omnidirectionally extended area around the read range of the at least two of the reader devices.

9. The method of any one of claims 6 to 8, further comprising at least one of:
a) receiving, by the application, the first tag data and first signal metadata from each of the reader devices, wherein the first signal metadata received from each of the reader devices is different; and determining, by the application, a first location of the first **RFID** tags based on the first signal metadata received from each of the reader devices; and
b) receiving, by the application, the second tag data and second signal metadata from each of the reader devices, wherein the second signal metadata received from each of the reader devices is different; filtering, by the application, the second tag data and the second signal metadata to remove the first tag data and the first signal metadata; and optionally determining, by the application, a second location of the second **RFID** tags based on the second signal metadata received from each of the reader devices.

10. A management system, comprising:
a non-transitory memory; and
an application stored at the memory, which when executed by a processor of the management system, causes the management system to be configured to:
sequentially instruct each of a plurality of reader devices to transmit a first interrogation signal to first radio frequency identification (RFID) tags within a read range of a respective reader device in a respective read session;
instruct all of the reader devices to listen for and evaluate first signal responses carrying first tag data received from the first RFID tags during a plurality of read sessions performed by the reader devices;
receive, from each of the reader devices, the first tag data and first signal metadata describing first signal responses received by each of the reader devices from each of the first RFID tags;
determine a location of each of the first RFID tags based on the first signal metadata received from each of the reader devices;
when a missing tag is identified in the first tag data received from each of the reader devices:
instruct at least two reader devices of the reader devices that are positioned within a predefined distance from each other to concurrently transmit power signals into an area;
instruct a first reader device of the at least two reader devices to transmit a second interrogation signal into the area;
instruct all of the reader devices to listen for and evaluate second signal responses carrying second tag data received from a second RFID tag positioned outside of read ranges of the at least two reader devices;
receive, from each of the at least two reader devices, the second tag data; and
evaluate the second tag data to determine that the missing tag is identified in the second tag data.

11. The management system of claim 10, wherein the application is further configured to:
receive second signal metadata describing the second signal responses received by each of the at least two reader devices from each of the second RFID tags; and
determine a location of each of the second RFID tags based on the second signal metadata received from each of the at least two reader devices.

12. The management system of claim 10 or 11, wherein the application is further configured to determine an overlapping read range between the at least two reader devices based on the second signal responses received by each of the at least two reader devices.

13. The management system of any one of claims 10 to 12, wherein the second tag data includes the first tag data, and wherein the application is further configured to filter the second tag data to remove the first tag data prior to the second tag data being evaluated.

14. The management system of any one of claims 10 to 13, wherein at least one of:
a) the missing tag is identified in a request received via a user interface of the management system, wherein the request includes an identifier of the missing tag, and wherein the second **RFID** tag includes a data store configured to store the identifier; and
b) the missing tag is coupled to an item associated with a value higher than a threshold.

15. The management system of any one of claims 10 to 14, wherein the application is further configured to determine when a missing tag is identified in the first tag data received from each of the reader devices based on a comparison between the first tag data and prior tag data received from a common read zone.
